# EUROPEAN PATENT SPECIFICATION

(11) **EP 1 944 913 B1**
(45) Date of publication and mention of the grant of the patent: **15.05.2013**
(21) Application number: 07300716.3
(22) Date of filing: 11.01.2007
(51) Int. Cl.: H04W 36/00, H04W 80/04, H04W 60/00

(54) **Handover method, mobile node and anchor point device**
Weiterreichungsverfahren, mobiler Knoten und Ankerpunktvorrichtung
Procédé de transfert, noeud mobile et dispositif de point d'ancrage

(43) Date of publication of application: 16.07.2008
(73) Proprietor: Alcatel Lucent, 75007 Paris (FR)
(72) Inventor: Kuefner, Tobias, 76297 Stutensee (DE)
(74) Representative: ALU Antw Patent Attorneys

(56) References cited:
- US-A1- 2005 226 186
- US-A1- 2006 029 020
- KOODLI R ET AL: "Fast Handovers for Mobile IPv6" IETF STANDARD, INTERNET ENGINEERING TASK FORCE, IETF, CH, July 2005 (2005-07), XP015041931 ISSN: 0000-0003
- PERKINS C: "RFC2002: IP mobility support" NETWORK WORKING GROUP REQUEST FOR COMMENTS, no. 2002, October 1996 (1996-10), pages 1-60, XP002975317

## Description

### BACKGROUND OF THE INVENTION

The present invention relates to a handover method for mobile device communicating according to the mobile internet protocol version 6. The invention further relates to a mobile node adapted to perform the handover method and an anchor point device adapted to perform the handover method.

A mobility support for internet protocol version 6 (IPv6) has been proposed in IETF request for comments (RFC) 3775. For delay sensitive multimedia applications however the handover latency caused by mobile IPv6 can be too high. In the IETF request for comments (RFC) 4068 a fast handover method for mobile IPv6 has been proposed. The anticipated handover method proposed in RFC 4068 can solve the problem of handover latency if a certain handover prediction is available early enough. The mechanisms applied by the fast handover method described in RFC 4068 in order to reduce latency are sometimes referred to as handover preparation.

A hierarchical mobile IPv6 mobility management has been proposed in IETF RFC 4140. This document presents an extension to the mobile IPv6 presented in RFC 4068 to allow for local mobility handling. The RFC 4140 introduces a mobility anchor point to improve performance of a mobile IPv6 handover. RFC 4140 also presents examples of integrating the mobility anchor point (MAP) into the framework of fast handovers for mobile IPv6 of RFC 4068. One possibility is that the previous access router which is the anchor point device in the framework of RFC 4068 acts as the mobility anchor point. A second scenario discussed in RFC 4140 is to place the MAPs in an aggregation router above the access router.

In the handover method presented in RFC 4068 a mobile node receives a layer 2 trigger message, referred to in RFC 4068 as Proxy router Advertisement (PrRtAdv). The mobile node requests information on layer 3 of a new access router (NAR) from a previous access router (PAR) by using information included in the layer 2 trigger message. This is done by the mobile node sending a fast binding update (FBU) to the previous access router (PAR). The fast binding update is a request from the mobile node requesting the previous access router to perform fast binding update. The previous access router then sends a handover initiate message (HI) to the new access router (NAR). The new access router (NAR) sends a handover acknowledge message (HAck) to the previous access router (PAR).

In predictive fast handover the handover acknowledge message (HAck) is received by the previous access router (PAR) and the final handover decision is taken with the reception of the handover acknowledge message (HAck) at the previous access router (PAR). The mobile node then receives information on an IP address of the new access router (NAR) and the new care of address (NCoA) to be used when moving to the new access router (NAR) over the Fast Binding Acknowledgement (FBAck) message.

In reactive fast handover either no handover acknowledge message (HAck) is sent from the new access router (NAR) or the handover acknowledge message (HAck) is not received by the previous access router (PAR). In this case a fast neighbor advertisement message (FNA) is sent from the mobile node to the new access router (NAR) to announce attachment and to confirm the use of the new care of address (NCoA).

The United States Patent Application Publication US 2006 0029020 A1 a handover method is described and a new care of address is created using a media access control (MAC) address in the mobile IPv6.

In IETF Request For Comments RFC 2002 an IF mobility support is proposed. RFC 2002 mentions that multiple simultaneous mobility bindings are likely to be useful when a mobile node using at least one wireless network interface moves within the wireless transmission range of more than one foreign agent. Tunneling of IP datagrams to each care of address is foreseen in RFC 2002.

### OBJECT OF THE INVENTION

The fast handover method of RFC 4068 has been designed to provide a better latency for e. g. multimedia applications. However fast handover is only successful if a certain handover prediction is available early enough. In future mobile networks especially in heterogeneous ones multiple candidate access routers can be available at the same time. The access points can be access routers of different access techniques. Due to unforeseeable radio link characteristics and terminal mobility, handover prediction is uncertain in these cases. Thus fast handover could be unreliable even if the new access router has been detected early enough.

The invention has the object of providing a method that enables reliable handover with low latency especially in a heterogeneous environment with different access routers of different access techniques. It is another object of the invention to provide a mobile node and an anchor point device performing that method.

### SUMMARY OF THE INVENTION

These objects and others that appear below are achieved by a handover method according to claim 1, a handover method according to claim 8, a corresponding mobile node according to claim 12 and an anchor point device according to claim 16.

In future mobile networks, especially in heterogeneous ones, multiple candidate access routers can be available at the same time. Radio link characteristics and mobility of the mobile node in general are unforeseeable. Thus handover prediction in general is uncertain. In order to reduce handover latency for all available candidate access routers simultaneous handover preparations for two or more candidate access routers are proposed.

An anchor point device is for example an access router over which a mobile node is connected to an IP network. The mobile node is connected to the anchor point device over a wireless link e. g. a radio link. When the mobile node is moving a handover might become necessary when the mobile node is moving out of reach of the anchor point device.

According to one aspect of the invention the anchor point device sends information to a mobile node. The information comprises an IP address for a first candidate access router and a first new care of address to be used for that mobile node when moving from the anchor point device to the first candidate access router. The information also comprises an IP address of the second candidate access router and a second new care of address to be used for that mobile node when moving from the anchor point to that second candidate access router. This allows for simultaneous handover preparations. The anchor point device which can be a previous access router or a mobility anchor point provides information on multiple equivalent candidate access routers in this discovery phase. The anchor point device provides at least two but possibly more candidate access routers. The candidate access routers can provide comparable quality of service to the mobile node. The mobile node and the anchor point device then simultaneously prepare handover to each of that candidate access routers.

The mobile node receives the information sent from the anchor point device. The information comprises an IP address of a first candidate access router and a first new care of address to be used by the mobile node when moving from said anchor point device to said first candidate access router. The information also comprises the IP address of the second candidate access router and a second new care of address to be used for said mobile node when moving from said anchor point to said second candidate access router.

According to another aspect of the invention, the mobile node then sends a request to the anchor point device to requesting said anchor point device to perform a fast binding update to said first and that second candidate access router. Said anchor point device receives the request requesting to perform a fast binding update to that first and second candidate access routers.

According to another aspect of the invention the anchor point device prepares a handover of the mobile node having received a request for fast binding update. The anchor point device prepares a handover of the mobile node to that first and to that second candidate access router. The handover of the mobile node more than two, e. g. three, four or multiple, candidate access routers can also be prepared.

According to another aspect of the invention the preparation of handover may comprise that said anchor point device sends a first handover initiate message to said first candidate access router and a second handover initiate message to said second candidate access router. According to another embodiment of the invention handover initiate messages can be sent to more than two, e. g. three, four or multiple, candidate access routers.

Having sent the first and second handover initiate message the anchor point device may receive first and second handover acknowledge messages from said first and second candidate access routers respectively. If the anchor point device sends handover initiate messages to more than two candidate access routers more than two handover acknowledge messages may be received. Each candidate access router may send a handover acknowledge message to the anchor point device in response to the handover initiate message.

According to a preferred embodiment of the invention, the anchor point device performs a fast binding update by updating the binding cache with the mobile node's first and second new care of address. The fast binding update is performed for each of the candidate access routers, if multiple candidate access routers are present. In the case of multiple candidate access routers the binding cache is updated with the mobile node's first second, third and so on new care of address.

According to another aspect of the invention the anchor point device, after preparing the handover of the mobile node, makes a handover decision. The anchor point device decides to perform the handover to a new access router, the new access router being one of the first and second candidate access routers. The new access router can also be one of said more than two, e. g. three, four or multiple, candidate access routers. The handover may be performed by sending a fast binding acknowledgement to the mobile node from the anchor point device. The fast binding acknowledgement indicates the new access router, the new access router being the one of the candidate access routers to which the handover is to be performed.

According to another embodiment of the invention, there is a anchor point device which is a mobility anchor point and which does not correspond to the previous access router. According to this embodiment, the fast binding update may be sent from the mobile node to the mobility anchor point. The mobility anchor point may send in return the fast binding acknowledgement to the mobile node. The mobile node then receives the fast binding acknowledgement from the mobility anchor point.

According to another embodiment of the invention the mobile node requests information of candidate access routers from said anchor point device prior to receiving information from said anchor point device. Said information comprises the lP address and the new care of address from first and second candidate access routers. This request may be triggered by a layer 2 trigger received by the mobile node.

According to another embodiment of the invention the mobile node receives a fast neighbour advertisement message from the new access router over the new link by which the mobile is connect to a new access router.

As soon as the handover to the new access router has been completed redundant handover preparations are stopped.

### BRIEF DESCRIPTION OF THE DRAWINGS

Other characteristics and advantages of the invention will become apparent in the following detailed description of preferred embodiments of the invention illustrated by the accompanying drawing given by way of non limiting illustration.

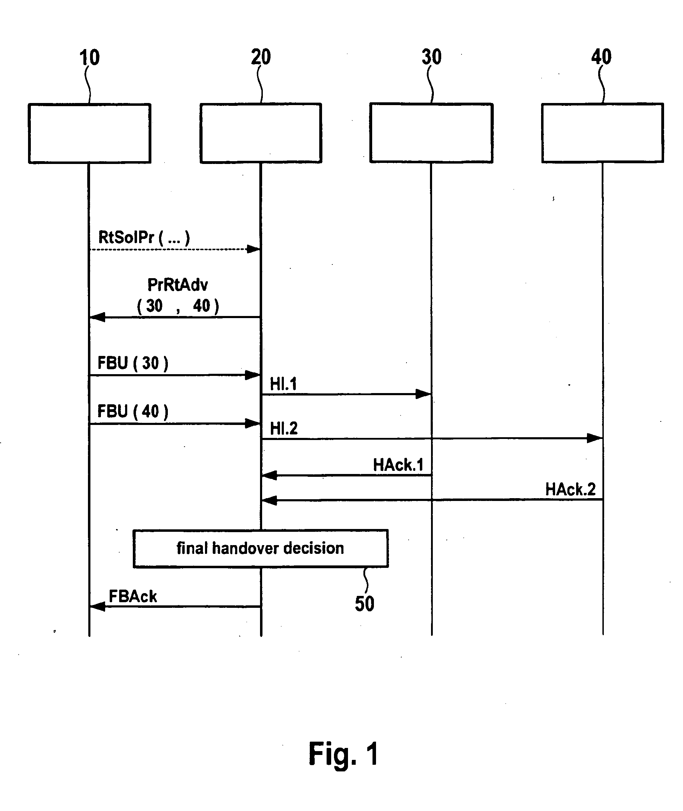

Figure 1 shows a schematic overview of an example of an inventive handover method.

### DETAILED DESCRIPTION OF THE INVENTION

Figure 1 shows the schematic overview of an example of an inventive handover method. The handover method provides simultaneous handover preparations for fast handover for mobile IPv6. It applies to network controlled handover methods.

At the beginning of the method the mobile node 10 optionally sends the router solicitation for proxy advertisement message RtSolPr to the anchor point device 20. The router solicitation for proxy advertisement message RtSolPr requests information of candidate access routers 30, 40 from the anchor point device 20. Candidate access routers 30,40 are routers to which the mobile node 10 can be potentially handed over.

Sending out this message enables the mobile node 10 to discover candidate access routers 30, 40 providing access to an IP network.

The anchor point device 20 then sends a proxy router advertisement PrRtAdv message to the mobile node 10 that provides information about neighbouring links provided by candidate access routers30, 40. In case a network initiated handover is performed the proxy router advertisement message PrRtAdv acts as an initiating trigger.

If multiple equivalent candidate access routers 30, 40 are available the anchor point device 20 provides information about each of these candidate access routers 30, 40. This information can be provided in an unsolicited PrRtAdv message or in a PrRtAdv message that is emitted in response to a RtSoIPr message.

The proxy router advertisement message PrRtAdv comprises an IP address of each of the candidate access routers 30, 40 and new care of address information NCoA to be used for the mobile node 10 when moving from the anchor point 20 to one of the candidate access routers 30, 40.

In the example shown in Fig. 1 the anchor point device 20 sends information in the PrRtAdv message about candidate access routers 30 and 40. The mobile node 10 receives the proxy router advertisement PrRtAdv information comprising information about each of the candidate access routers 30, 40. In response the mobile node 10 send s a fast binding update request FBU requesting fast binding update for each of these candidate access routers 30, 40. The fast binding update request FBU may comprise several fast binding update requests FBU(30), FBU(40) one for each candidate access router 30, 40. In the example shown in Fig. 1 one fast binding update request FBU (30) is sent for candidate access router 30 and one fast binding update request FBU (40) is sent for candidate access router 40.

The anchor point device 20 performs network side preparations for handover to each of the candidate access routers 30, 40. The handover preparations comprise handover initiate messages HI.1, HI.2 to each of the candidate access routers 30, 40 and receiving handover acknowledge messages HAck.1, HAck.2 from each of the candidate access routers30, 40. In the example shown in Fig. 1 the first candidate access router 30 receives the first handover initiated message HI.1 and sends the first handover acknowledge message HAck.1. The second candidate access router 40 receives the second handover initiated message HI.2 and sends the second handover acknowledge message HAck.2.

The handover preparations shown in Fig. 1 are for two candidate access routers 30, 40. The preparations may be performed for more than two candidate access routers.

At one point 50 of the process shown in Fig. 1 final handover decision is taken by the anchor point device 20.

In predictive fast handover the anchor point device 20 sends a fast binding acknowledge message FBAck to the mobile node 10, said fast binding acknowledge message FBAck comprising information about the new access router. The new access router is the access router to which the handover is to be performed. When performing predictive fast handover the fast binding acknowledgement message is sent from the anchor point device 20 to the mobile node 10 after receiving handover acknowledge messages HI.1, HL2 from at least one of the candidate access routers 30, 40. In another embodiment of the invention the final handover decision 50 is taken after having received all handover acknowledge HI.1, Hl.2 messages of all candidate access router30, 40.

In reactive fast handover the handover is performed without the mobile node 10 having received a fast binding acknowledgment message FBAck from the anchor point device 20. In this case the mobile node 10 sends out a fast neighbour advertisement message FNA on the new link to the new access router. The fast neighbour advertisement message announces the new access router used by the mobile node 10.

As soon as the fast handover is completed all redundant handover preparations can be stopped.

## Claims

1. Handover method of the mobile IPv6, Internet Protocol version 6, comprising the steps of:
i) an anchor point device (20) sending information (PrRtAdv) to a mobile node (10), said information (PrRtAdv) comprising an IP address of a first candidate access router (30) and a first new care of address to be used for said mobile node (10) when moving from said anchor point device (20) to said first candidate access router (30), and
an IP address of a second candidate access router (40) and a second new care of address to be used for said mobile node (10) when moving from said anchor point device (20) to said second candidate access router (40),
**characterized by**
ii) said anchor point device (20) receiving a request (FBU) from said mobile node, requesting the anchor point device (20) to perform a fast binding update to said first and said second candidate access router (30, 40).

2. Handover method according to claim 1, further comprising the steps of
c) said anchor point device (20) preparing a handover of said mobile node (10) to said first candidate access router (30) and to said second candidate access router (40).

3. Handover method according to claim 2, step c) comprising the step of said anchor point device (20) sending a first handover initiate message (HI.1) to said first candidate access router (30) and a second handover initiate message (HI.2) to said second candidate access router (40).

4. Handover method according to claim 3, step c) further comprising the step of
said anchor point device (20) receiving a first handover acknowledge message (HAck.1) from said first candidate access router (30) and a second handover acknowledge message (HAck.2) from said second candidate access router (40).

5. Handover method according to claim 4, further comprising the step of said anchor point device (20) performing said fast binding update by updating the binding cache with the mobile node's first and second new care of address.

6. Handover method according to claim 1, further comprising the step of said anchor point device (20) making a handover decision, deciding to perform the handover to a new access router, the new access router being one of the first and second candidate access routers (30, 40).

7. Handover method according to claim 6, further comprising the step of said anchor point device (20) sending a fast binding acknowledgement (FBAck) to said mobile node (10), indicating the new access router.

8. Handover method according to claim 1, further comprising the steps of
i) a mobile node (10) receiving information (PrRtAdv) from on anchor point device (20), said information (PrRtAdv) comprising an IP address of a first candidate access router (30) and a first new care of address to be used for said mobile node (10) when moving from said anchor point device (20) to said first candidate access router (30), and
an IP address of a second candidate access router (40) and a second new care of address to be used for said mobile node (10) when moving from said anchor point device (20) to said second candidate access router (40),
ii) said mobile node (10) sending a request (FBU) to said anchor point device (20), requesting the anchor point device (20) to perform a fast binding update to said first and said second candidate access router (30, 40).

9. Handover method according to claim 8, further comprising the step of said mobile node (10) prior to step i) requesting information of candidate access routers from said anchor point device (20).

10. Handover method according to claim 8, further comprising the step of said mobile node (10) receiving from said anchor point device (20) a fast binding acknowledgement (FBAck), indicating the new access router, the new access router being the one of the first and second candidate access routers (30, 40), to which the handover is to be performed.

11. Handover method according to claim 8, further comprising the step of receiving a fast neighbor advertisement message at a new access router, the new access router being the one of the first and second candidate access routers (30, 40) to which the handover has been performed.

12. Mobile node (10) adapted to
i) receive information (PrRtAdv) from an anchor point device (20), said information (PrRtAdv) comprising
an IP address of a first candidate access router (30) and a first new care of address to be used for said mobile node (10) when moving from said anchor point device (20) to said first candidate access router (30), and
an IP address of a second candidate access router (40) and a second new care of address to be used for said mobile node (10) when moving from said anchor point device (20) to said second candidate access router (40),
and **characterized by** being adapted to
ii) send a request (FBU) to said anchor point device (20), requesting the anchor point device (20) to perform a fast binding update to said first and said second candidate access router (30, 40).

13. Mobile node (10) according to claim 12, adapted to request prior to step i) information of candidate access routers from said anchor point device (20).

14. Mobile node (10) according to claim 12, adapted to receive from said anchor point device (20) a fast binding acknowledgement (FBAck), indicating the new access router, the new access router being the one of the first and second candidate access routers (30, 40), to which the handover is to be performed.

15. Mobile node (10) according to claim 12, adapted to send a fast neighbor advertisement message (FNA) to a new access router, the new access router being the one of the first and second candidate access routers (30, 40) to which the handover has been performed.

16. Anchor point device (20) adapted to perform the handover method of claim 1.

17. Anchor point device (20) according to claim 16, **characterized by** the anchor point device (20) being α previous access router.

18. Anchor point device (20) according to claim 16, **characterized by** the anchor point device (20) being a mobility anchor point.

## Patentansprüche

1. Weiterreichungsverfahren des Mobilgeräts in einer IPv6, Internet Protocol Version 6-Umgebung, die folgenden Schritte umfassend:
i) Senden, durch eine Ankerpunktvorrichtung (20), von Informationen (PrRtAdv) an einen mobilen Knoten (10), wobei die besagten Informationen (PrRtAdv) umfassen:
eine IP-Adresse eines ersten Zugangsrouter-Kandidaten (30) und eine erste neue Care-of-Adresse, welche für den besagten mobilen Knoten (10) während des Übergangs von der besagten Ankerpunktvorrichtung (20) zu dem besagten ersten Zugangsrouter-Kandidaten (30) zu verwenden sind, und
eine IP-Adresse eines zweiten Zugangsrouter-Kandidaten (40) und eine zweite neue Care-of-Adresse, welche für den besagten mobilen Knoten (10) während des Übergangs von der besagten Ankerpunktvorrichtung (20) zu dem besagten zweiten Zugangsrouter-Kandidaten (40) zu verwenden sind,
**gekennzeichnet durch**
ii) den Empfang, an der besagten Ankerpunktvorrichtung (20), einer Anforderung (FBU) von dem besagten mobilen Knoten, um die Ankerpunktvorrichtung (20) aufzufordern, eine Fast-Binding-Aktualisierung des besagten ersten und des besagten zweiten Zugangsrouter-Kandidaten (30, 40) durchzuführen.

2. Weiterreichungsverfahren nach Anspruch 1, weiterhin den folgenden Schritt umfassend:
c) Vorbereiten, durch die besagte Ankerpunktvorrichtung (20), einer Weiterreichung des besagten mobilen Knotens (10) an den besagten ersten Zugangsrouter-Kandidaten (30) und an den besagten zweiten Zugangsrouter-Kandidaten (40).

3. Weiterreichungsverfahren nach Anspruch 2, wobei Schritt c) den Schritt des Sendens, durch die besagte Ankerpunktvorrichtung (20), einer ersten Weiterreichungseinleitungsnachricht (HI.1) an den besagten ersten Zugangsrouter-Kandidaten (30) und einer zweiten Weiterreichungseinleitungsnachricht (HI.2) an den besagten zweiten Zugangsrouter-Kandidaten (40) umfasst.

4. Weiterreichungsverfahren nach Anspruch 3, wobei Schritt c) weiterhin den folgenden Schritt umfasst:
Empfangen, an der besagten Ankerpunktvorrichtung (20), einer ersten Weiterreichungsbestätigungsnachricht (HAck.1) von dem besagten ersten Zugangsrouter-Kandidaten (30) und einer zweiten Weiterreichungsbestätigungsnachricht (HAck.2) von dem besagten zeiten Zugangsrouter-Kandidaten (40).

5. Weiterreichungsverfahren nach Anspruch 4, weiterhin den folgenden Schritt umfassend:
Durchführen, durch die besagte Ankerpunktvorrichtung (20), der besagten Fast-Binding-Aktualisierung durch Aktualisieren des Binding Cache mit der ersten und der zweiten neuen Care-of-Adresse des mobilen Knotens.

6. Weiterreichungsverfahren nach Anspruch 1, weiterhin umfassend den Schritt des Treffens, durch die besagte Ankerpunktvorrichtung (20), einer Weiterreichungsentscheidung, um das Durchführen der Weiterreichung an einen neuen Zugangsrouter zu entscheiden, wobei der neue Zugangsrouter entweder der erste oder der zweite Zugangsrouter-Kandidat (30, 40) ist.

7. Weiterreichungsverfahren nach Anspruch 6, weiterhin umfassend den Schritt des Sendens, durch die besagte Ankerpunktvorrichtung (20), einer Fast-Binding-Bestätigung (FBAck) an den besagten mobilen Knoten (10), welche den neuen Zugangsrouter angibt.

8. Weiterreichungsverfahren nach Anspruch 1, weiterhin die folgenden Schritte umfassend:
i) Empfangen, an einem mobilen Knoten (10), von Informationen (PrRtAdv) von einer Ankerpunktvorrichtung (20), wobei die besagten Informationen (PrRtAdv) umfassen:
eine IP-Adresse eines ersten Zugangsrouter-Kandidaten (30) und eine erste neue Care-of-Adresse, welche für den besagten mobilen Knoten (10) während des Übergangs von der besagten Ankerpunktvorrichtung (20) zu dem besagten ersten Zugangsrouter-Kandidaten (30) zu verwenden sind, und
eine IP-Adresse eines zweiten Zugangsrouter-Kandidaten (40) und eine zweite neue Care-of-Adresse, welche für den besagten mobilen Knoten (10) während des Übergangs von der besagten Ankerpunktvorrichtung (20) zu dem besagten zweiten Zugangsrouter-Kandidaten (40) zu verwenden sind, umfassen,
ii) Senden, durch den besagten mobilen Knoten (10), einer Anforderung (FBU) an die besagte Ankerpunktvorrichtung (20), um die Ankerpunktvorrichtung (20) aufzufordern, eine Fast-Binding-Aktualisierung des besagten ersten und des besagten zweiten Zugangsrouter-Kandidaten (30, 40) durchzuführen.

9. Weiterreichungsverfahren nach Anspruch 8, weiterhin umfassend, vor Schritt i), den Schritt des Anforderns, durch den besagten mobilen Knoten (10), von Informationen über Zugangsrouter-Kandidaten von der besagten Ankerpunktvorrichtung (20).

10. Weiterreichungsverfahren nach Anspruch 8, weiterhin umfassend den Schritt des Empfangens, an dem besagten mobilen Knoten (10), einer Fast-Binding-Bestätigung (FBAck), welche den neuen Zugangsrouter angibt, von der besagten Ankerpunktvorrichtung (20), wobei der neue Zugangsrouter derjenige des ersten und des zweiten Zugangsrouter-Kandidaten (30, 40) ist, an welchen die Weiterreichung durchzuführen ist.

11. Weiterreichungsverfahren nach Anspruch 8, weiterhin umfassend den Schritt des Empfangens einer schnellen Nachbaranzeige-Nachricht an einem neuen Zugangsrouter, wobei der neue Zugangsrouter derjenige des ersten und des zweiten Zugangsrouter-Kandidaten (30, 40) ist, an welchen die Weiterreichung durchgeführt wurde.

12. Mobiler Knoten (10), ausgelegt für
i) den Empfang von Informationen (PrRtAdv) von einer Ankerpunktvorrichtung (20), wobei die besagten Informationen (PrRtAdv) umfassen:
Eine IP-Adresse eines ersten Zugangsrouter-Kandidaten (30) und eine erste neue Care-of-Adresse, welche für den besagten mobilen Knoten (10) während des Übergangs von der besagten Ankerpunktvorrichtung (20) zu dem besagten ersten Zugangsrouter-Kandidaten (30) zu verwenden sind, und
eine IP-Adresse eines zweiten Zugangsrouter-Kandidaten (40) und eine zweite neue Care-of-Adresse, welche für den besagten mobilen mobilen Knoten (10) während des Übergangs von der besagten Ankerpunktvorrichtung (20) zu dem besagten zweiten Zugangsrouter-Kandidaten (40) zu verwenden sind,
und **dadurch gekennzeichnet, dass** er ausgelegt ist für
ii) das Senden einer Anforderung (FBU) an die besagte Ankerpunktvorrichtung (20), um die Ankerpunktvorrichtung (20) aufzufordern, eine Fast-Binding-Aktualisierung des besagten ersten und des besagten zweiten Zugangsrouter-Kandidaten (30, 40) durchzuführen.

13. Mobiler Knoten (10) nach Anspruch 12, ausgelegt für das Anfordern, vor Schritt i), von Informationen über Zugangsrouter-Kandidaten von der besagten Ankerpunktvorrichtung (20).

14. Mobiler Knoten (10) nach Anspruch 12, ausgelegt für den Empfang, von der besagten Ankerpunktvorrichtung (20), einer Fast-Binding-Bestätigung (FBAck), welche den neuen Zugangsrouter angibt, wobei der neue Zugangsrouter derjenige unter den ersten und zweiten Zugangsrouter-Kandidaten (30, 40) ist, an welchen die Weiterreichung durchzuführen ist.

15. Mobiler Knoten (10) nach Anspruch 12, ausgelegt für das Senden einer schnellen Nachbaranzeige-Nachricht (FNA) an einen neuen Zugangsrouter, wobei der neue Zugangsrouter derjenige unter den ersten und zweiten Zugangsrouter-Kandidaten (30, 40) ist, an welchen die Weiterreichung durchgeführt wurde.

16. Ankerpunktvorrichtung (20), ausgelegt für das Durchführen des Weiterreichungsverfahrens gemäß Anspruch 1.

17. Ankerpunktvorrichtung (20) nach Anspruch 16, **dadurch gekennzeichnet, dass** die Ankerpunktvorrichtung (20) ein vorheriger Zugangsrouter ist ist.

18. Ankerpunktvorrichtung (20) nach Anspruch 16, **dadurch gekennzeichnet, dass** die Ankerpunktvorrichtung (20) ein Mobilitäts-Ankerpunkt ist.

## Revendications

1. Procédé de transfert de l'IPv6, protocole Internet version 6, mobile, comprenant les étapes suivantes :
i) un dispositif à point d'ancrage (20) envoyant des informations (PrRtAdv) à un noeud mobile (10), lesdites informations (PrRtAdv) comprenant une adresse IP d'un premier routeur d'accès candidat (30) et une première nouvelle adresse d'entretien à utiliser pour ledit noeud mobile (10) lors du déplacement dudit dispositif à point d'ancrage (20) vers ledit premier routeur d'accès candidat (30), et
une adresse IP d'un deuxième routeur d'accès candidat (40) et une deuxième nouvelle adresse d'entretien à utiliser pour ledit noeud mobile (10) lors du déplacement dudit dispositif à point d'ancrage (20) vers ledit deuxième routeur d'accès candidat (40), **caractérisé par**
ii) ledit dispositif à point d'ancrage (20) recevant une demande (FBU) de la part dudit noeud mobile, demandant au dispositif à point d'ancrage (20) d'effectuer une mise à jour de rattachement rapide audit premier et audit deuxième routeur d'accès candidat (30, 40).

2. Procédé de transfert selon la revendication 1, comprenant en outre les étapes suivantes :
c) ledit dispositif à point d'ancrage (20) préparant un transfert dudit noeud mobile (10) vers ledit premier routeur d'accès candidat (30) et ledit deuxième routeur d'accès candidat (40).

3. Procédé de transfert selon la revendication 2, l'étape c) comprenant l'étape suivante :
ledit dispositif à point d'ancrage (20) envoyant un premier message d'initiation de transfert (HI.1) audit premier routeur d'accès candidat (30) et un deuxième message d'initiation de transfert (HI.2) audit deuxième routeur d'accès candidat (40).

4. Procédé de transfert selon la revendication 3, l'étape c) comprenant en outre l'étape suivante :
ledit dispositif à point d'ancrage (20) recevant un premier message de confirmation de transfert (HAck.1) de la part dudit premier routeur d'accès candidat (30) et un deuxième message de confirmation de transfert (HAck.2) de la part dudit deuxième routeur d'accès candidat (40).

5. Procédé de transfert selon la revendication 4, comprenant en outre l'étape suivante :
ledit dispositif à point d'ancrage (20) effectuant ladite mise à jour de rattachement rapide en mettant à jour le cache de rattachement avec la première et la deuxième adresse d'entretien du noeud mobile.

6. Procédé de transfert selon la revendication 1, comprenant en outre l'étape suivante :
ledit dispositif à point d'ancrage (20) prenant une décision de transfert, décidant d'effectuer le transfert vers un nouveau routeur d'accès, le nouveau routeur d'accès étant l'un desdits premier et deuxième routeurs d'accès candidats (30, 40).

7. Procédé de transfert selon la revendication 6, comprenant en outre l'étape suivante :
ledit dispositif à point d'ancrage (20) envoyant une confirmation de rattachement rapide (FBAck) audit noeud mobile (10), indiquant le nouveau routeur d'accès.

8. Procédé de transfert selon la revendication 1, comprenant en outre les étapes suivantes :
i) un noeud mobile (10) recevant des informations (PrRtAdv) de la part d'un dispositif à point d'ancrage (20), lesdites informations (PrRtAdv) comprenant une adresse IP d'un premier routeur d'accès candidat (30) et une première nouvelle adresse d'entretien à utiliser pour ledit noeud mobile (10) lors du déplacement du dispositif à point d'ancrage (20) vers ledit premier routeur d'accès candidat (30), et
une adresse IP d'un deuxième routeur d'accès candidat (40) et une deuxième nouvelle adresse d'entretien à utiliser pour ledit noeud mobile (10) lors du déplacement du dispositif à point d'ancrage (20) vers ledit deuxième routeur d'accès candidat (40),
ii) ledit noeud mobile (10) envoyant une demande (FBU) audit dispositif à point d'ancrage (20), demandant au dispositif à point d'ancrage (20) d'effectuer une mise à jour de rattachement rapide audit premier et audit deuxième routeur d'accès candidat (30, 40).

9. Procédé de transfert selon la revendication 8, comprenant en outre l'étape suivante :
ledit noeud mobile (10), avant l'étape i), demandant des informations sur lesdits routeurs d'accès candidats de la part dudit dispositif à point d'ancrage (20).

10. Procédé de transfert selon la revendication 8, comprenant en outre l'étape suivante :
ledit noeud mobile (10) recevant de la part dudit dispositif à point d'ancrage (20) une confirmation de rattachement rapide (FBAck) indiquant le nouveau routeur d'accès, le nouveau routeur d'accès étant l'un desdits premier et deuxième routeurs d'accès candidats (30, 40) vers lequel il faut effectuer le transfert.

11. Procédé de transfert selon la revendication 8, comprenant en outre l'étape de réception d'un message d'annonce de voisin sur un nouveau routeur d'accès, le nouveau routeur d'accès étant l'un desdits premier et deuxième routeurs d'accès candidats (30, 40) vers lequel le transfert a été effectué.

12. Noeud mobile (10) adapté pour
i) recevoir des informations (PrRtAdv) de la part d'un dispositif à point d'ancrage (20), lesdites informations (PrRtAdv) comprenant
une adresse IP d'un premier routeur d'accès candidat (30) et une première nouvelle adresse d'entretien à utiliser pour ledit noeud mobile (10) lors du déplacement du dispositif à point d'ancrage (20) vers ledit premier routeur d'accès candidat (30), et
une adresse IP d'un deuxième routeur d'accès candidat (40) et une deuxième nouvelle adresse d'entretien à utiliser pour ledit noeud mobile (10) lors du déplacement du dispositif à point d'ancrage (20) vers ledit deuxième routeur d'accès candidat (40), et **caractérisé en ce qu'**il est adapté pour
ii) envoyer une demande (FBU) audit dispositif à point d'ancrage (20), demandant au dispositif à point d'ancrage (20) d'effectuer une mise à jour de rattachement rapide audit premier et audit deuxième routeur d'accès candidat (30, 40).

13. Noeud mobile (10) selon la revendication 12, adapté pour demander, avant l'étape i), des informations sur lesdits routeurs d'accès candidats de la part dudit dispositif à point d'ancrage (20).

14. Noeud mobile (10) selon la revendication 12, adapté pour recevoir de la part dudit dispositif à point d'ancrage (20) une confirmation de rattachement rapide (FBAck) indiquant le nouveau routeur d'accès, le nouveau routeur d'accès étant l'un desdits premier et deuxième routeurs d'accès candidats (30, 40) vers lequel il faut effectuer le transfert.

15. Noeud mobile (10) selon la revendication 12, adapté pour envoyer un message d'annonce de voisin (FNA) à un nouveau routeur d'accès, le nouveau routeur d'accès étant l'un desdits premier et deuxième routeurs d'accès candidats (30, 40) vers lequel le transfert a été effectué.

16. Dispositif à point d'ancrage (20) adapté pour mettre en oeuvre le procédé selon la revendication 1.

17. Dispositif à point d'ancrage (20) selon la revendication 16, **caractérisé en ce que** le dispositif à point d'ancrage (20) est un routeur d'accès précédent.

18. Dispositif à point d'ancrage (20) selon la revendication 16, **caractérisé en ce que** le dispositif à point d'ancrage (20) est un point d'ancrage de mobilité.
